# EUROPEAN PATENT SPECIFICATION

(11) **EP 3 929 761 B1**
(45) Date of publication and mention of the grant of the patent: **03.04.2024**
(21) Application number: 20182082.6
(22) Date of filing: 24.06.2020
(51) Int. Cl.: G06F 16/22, G06F 16/28

(54) **A GRAPH DATABASE MANAGEMENT SYSTEM**
GRAPHENDATENBANKMANAGEMENTSYSTEM
SYSTÈME DE GESTION DE BASE DE DONNÉES DE GRAPHES

(43) Date of publication of application: 29.12.2021
(73) Proprietor: Nokia Solutions and Networks Oy, 02610 Espoo (FI)
(72) Inventor: DOBBELAERE, Philippe, 2520 Ranst (BE)
(74) Representative: IP HILLS NV

(56) References cited:
- WO-A1-2018/080560
- CN-A- 110 096 515

## Description

### Technical Field

Various example embodiments relate to a graph database management system and to a method for manipulating data in a graph database management system.

### Background

Graph databases use graph structures such as nodes and edges to represent and store a vast amount of slowly changing connected data, such as a music database. Graph databases use an entity-relationship model that describes how nodes are interconnected or related. According to the entity-relationship model, each node represents an entity such as a parameter, and each edge represents a connection or relation between different parameters. Data is thus represented and stored in the form of data records characterizing the relationship between the different entities.

Conventional graph databases are optimized either for querying or for writing data into the database. If the database is optimized for data querying, i.e. for reading data, the data writing becomes slow, and vice versa. Thus, the implementation of the graph database is driven by the specific requirements of its use case.

Recently, graph databases are gaining popularity in new application domains such as sensor networks where millions of sensors are sensing data at a very high frequency, for example, every few seconds. A sensor network may be configured to count the people entering and exiting, to count the cars entering and exiting a parking lot, or it may even be integrated in a traffic control infrastructure to count the cars before a traffic light. In such applications, the ability of the graph databases to handle fast-changing, highly dynamic data becomes crucial.

CN 110 096 515 A discloses an RDF data management method and device based on a triple and a storage medium. The method includes: generating three types of to-be-stored triplets from the triplets in the RDF data in a manner of adjusting the types of the main keys, the three types of to-be-stored triplets comprising a triplet taking a subject as a main key, a triplet taking a predicate as a main key and a triplet taking an object as a main key; respectively storing the three types of to-be-stored triplets of each triplet in storage units with different physical storage addresses on the SSD; and storing the corresponding relationship between the main key of each to-be-stored triple and the physical storage address stored in the to-be-stored triple in an address index table. Through the implementation of the method and the device, each piece of triple data is stored on the SSD according to different organization forms, so that the high parallelism of the SSD is fully utilized, and the data management performance on the SSD is greatly improved.

### Summary

Amongst others, it is an object of embodiments of the present disclosure to provide a graph database management system that enables storing highly dynamic data in graph databases without modifying the manner in which data is stored and queried in the graph database management system. It is a further object of embodiments of the present disclosure to provide a graph database management system optimized for both for data querying and data writing.

The scope of protection sought for various embodiments of the invention is set out by the independent claims.

The embodiments and features described in this specification that do not fall within the scope of the independent claims, if any, are to be interpreted as examples useful for understanding various embodiments of the invention.

This object is achieved, according to a first example aspect of the present disclosure, by the graph database management system according to claim 1.

In other words, the graph database management system stores the data in its memory in the form of data records in accordance with the entity-relationship model. An example of an entity-relationship model is the Resource Description Framework, RDF, data model. The RDF data model describes the data in the form of subject-predicate-object expression, known as triples. According to the RDF model, the subject defines an entity, the object defines either an entity or a value, and, the predicate defines the relation between them. For example, the information that "Sensor S_A is a CO2 sensor" and that "Sensor S_A has a value of 1000ppm", may be recorded as two triples. The first triple will have a subject denoting "Sensor S_A", a predicate denoting "is a" and an object denoting the entity "CO2 sensor", and the second triple will have a subject denoting "Sensor S_A", a predicate denoting "has a value of" and an object denoting the value "1000 ppm".

In addition to the subject, predicate and object, a data records may further contain additional fields such as time, a higher-level grouping concept of triples, etc. The higher-level grouping concept of triples may be for example a subgraph unique identifier.

In addition to storing the data in the memory, the graph database management system stores the memory address of the object. For this purpose, the database management system is configured to derive the memory address of the respective object, i.e. the location in the memory where the value of the respective object is stored.

The memory may comprise a cache memory for short term storage and a main memory for long term storage such as a hard disk. The cache memory may comprise one or more cache levels, for example, two or even three levels. The different cache levels are commonly referred to as L1, L2 and L3 levels. A data record thus may be stored in the main memory or in both the cache, for example at one or more cache levels and the main memory. Thus, the memory address for the main memory or memory addresses for both the cache and the main memory may be derived depending on where the object is stored.

The derived memory address is then associated with the respective object and the information is stored in the memory.

By associating the memory address indicating the storage location of the object in the memory, the object value of the data record may be updated by overwriting the old value stored at the memory address with the new one. As a result, a fast update of the object's value in the graph database management system is enabled. This in turn enables the graph database management system to store and manage highly dynamic data in the graph database without modifying the manner in which data is stored in and queried from the graph database. Thus, a solution applicable to different implementations of graph databases is provided.

When storing data in the graph database, the graph database management system determines unique identifiers for the respective data records. The unique identifiers are then associated with the memory addresses of the respective objects. This information, i.e. the unique identifiers together with the associated memory addresses is recorded in the memory of the graph database management system. For example, the information is stored in the form of a look-up table.

According to example embodiments, the respective objects have a value varying over time.

Depending on how fast the object value changes over time, data records may be classified as static or dynamic. Static data records are characterized by a constant object value, while dynamic data records are characterized by an object's value varying over time. Depending on the frequency of variation, dynamic data records may be further classified as slowly varying, i.e. less dynamic, or a fast varying, i.e. highly dynamic, data.

Storing the memory addresses associated with objects of dynamic data records allows limiting the amount of additional data stored in the memory and therefore minimizing the overall memory overhead.

According to example embodiments, the graph database management system is further configured to perform, when storing, in the memory, a new data record having an object with a varying over time value:
- storing, in the memory, the new data record;
- deriving a memory address of the object of the new data record; and
- storing, in the memory, the memory address associated with the object.

When storing new data records in the memory, i.e. when additional data is added, the graph database management system stores the new data records in the memory together with the one or memory addresses associated with the objects of the respective new data records. Depending on where the object is stored, the memory address for the main memory or memory addresses for both the cache and the main memory may be derived.

According to example embodiments, the graph database management system is further configured to perform, when deleting, from the memory, a data record having an object with a varying over time value:
- deleting, from the memory, the data record; and
- deleting, from the memory, the memory address associated with the object.

When deleting data records from the graph database management system, apart from deleting the data records from the memory, the memory addresses associated with the objects of the respective data records are deleted as well.

According to example embodiments, the graph database management system is further configured to perform, when updating a value of a respective object:
- retrieving, from the memory, the memory address associated with the respective object; and
- writing a new value to the memory address associated with the respective object.

A data record may be stored in the main memory or in both the cache and the main memory. Thus, when updating an object value in the graph database, the graph database management system retrieves the one or more memory addresses associated with the respective object. This may be done by retrieving the memory addresses associated with the unique identifier of the data record of the object.

According to example embodiments, the graph database management system is further configured to perform:
- querying and checking a condition associated with a respective object; and
- updating the value of the respective object if the condition is satisfied.

In other words, an object value will be updated if a specific condition is satisfied. The condition may be stored in the memory in the form of data records. The condition may thus be retrieved by issuing a query for that condition. The graph database management system will then check whether the new object value satisfies the condition and if so, it will update, i.e. write, the new value in the one or more memory addresses associated with the respective object.

This allows further limiting the number of writes in the memory and therefore optimizing the write performance of the graph database management system.

According to example embodiments, wherein the condition implements a threshold or a range-bound.

Different conditions may be implemented. For example, a condition may be a threshold or a range-bound of the object value. The range-bound may be defined by a minimum and a maximum value. The minimum and maximum values may be derived from object values observed over a period of time, i.e. a time series. The stored object value may thus be updated only if the new object value does not fall within the range-bound defined by the minimum and maximum values. This significantly reduces the write frequency while allowing to keep a usable model of the time series, i.e. in the form of a range-bound, in the graph database.

According to a second example aspect, the method according to claim 9 is disclosed.

According to example embodiments, the storing comprises storing the memory addresses and the respective unique identifiers in the form of a lookup table.

According to example embodiments, the respective objects have a value varying over time.

According to example embodiments, the method is further configured to perform, when updating a value of a respective object:
- retrieving, from the memory, the memory address associated with the respective object; and
- writing a new value to the memory address associated with the respective object.

According to example embodiments, the method is further configured to perform:
- querying and checking a condition associated with a respective object; and
- updating the value of the respective object if the condition is satisfied.

The other example embodiments of the first example aspect may further be applied as example embodiments to the second example aspects.

According to a third example aspect, the computer program product according to claim 14 is disclosed.

The other example embodiments of the first example aspect may be applied as example embodiments to the second example aspect.

According to a fourth example aspect, the computer readable storage medium according to claim 15 is disclosed.

The various example embodiments of the first example aspect may be applied as example embodiments to the third and fourth example aspects.

### Brief Description of the Drawings

Some example embodiments will now be described with reference to the accompanying drawings.
FIG.1 shows an example embodiment of a graph database management system for storing data obtained by a sensor network;
FIG.2A shows an example of data represented in the form of data records;
FIG.2B shows a graph representation of the data records of FIG.2A;
FIG.3A shows an example embodiment of a block scheme of the graph database management system according to the present disclosure;
FIG.3B shows an example of a look-up table according to the present disclosure storing the memory addresses of the data records;
FIG.4A shows an example of static and dynamic data records according to the present disclosure;
FIG.4B shows an example of a look-up table according to the present disclosure storing the memory addresses of the dynamic data records of FIG.4A;
FIG.5A shows steps according to an example embodiment of the present disclosure for storing data in a graph database;
FIG.5B shows steps according to an example embodiment of the present disclosure for updating data in a graph database;
FIG.5C shows steps according to an example embodiment of the present disclosure for deleting data in a graph database; and
FIG.6 shows an example embodiment of a suitable computing system for performing one or several steps in embodiments of the invention.

### Detailed Description of Embodiment(s)

A graph database stores data or information in the form of data records. The data records are created based on an entity-relationship model. An example of an entity-relationship model is the Resource Description Framework, RDF, data model. The RDF data model describes the data in the form of subject-predicate-object expression, known as triples. The subject denotes the resource, the predicate denotes properties or aspects of the resource with a value denoted in the object, or, expresses a relationship between the subject and the object when the object denotes another resource. Graph databases can be optimized either for querying, i.e. for reading data, or for writing data into the database. If the database is optimized for data querying, the data writing becomes slow, and vice versa.

The present disclosure discloses a graph database management system optimized both for querying and storing data and more specifically of highly dynamic data in the graph database, while preserving the manner in which data is stored in and queried from the graph database.

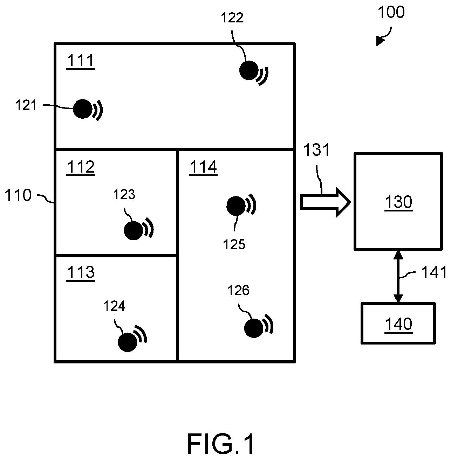

FIG.1 shows a wireless sensor network 100 comprising N sensors deployed in several different locations within an environment. The sensors monitor and record the physical conditions of the environment such as temperature, pollution levels, humidity, etc. The recorded information is then collected at a centralized location. In this figure, a wireless sensor network is deployed in an office building to monitor the air quality as well as the number of people occupying the office building. The sensor network comprises six CO2 sensors 121 to 126 deployed in different rooms of the building 110. Sensors 121 and 122 are deployed in room 111, sensors 125 and 126 are deployed in room 114 and sensors 123 and 124 are deployed in rooms 112 and 113, respectively.

The sensors record the CO2 level at a high frequency, for example, every 10 sec. The recorded CO2 levels are transmitted to the graph database management system 130 via a wireless channel 131. The graph database management system 130 thus receives a sensed CO2 level from a respective sensor at the frequency of 10 sec.

To monitor the air quality as well as the number of people occupying the rooms, the graph database management system 130 records a structural representation of the wireless sensor network as well as a characterization of the sensors. This information is stored in the form of data records, for example in the form of triples.

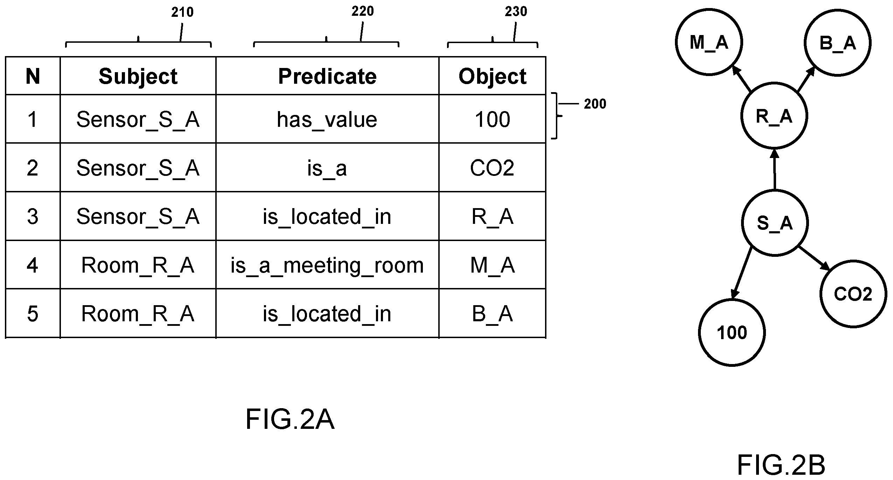

FIG.2A shows the data records related to the CO2 sensor 121 stored in the graph database. A data record 200 comprises a subject 210, a predicate 220, and an object 230, where the subject and the object define two entities and the predicate the relation between them. The first data record in the table records that the sensor "S_A" has a value of "100". In this example, the value 100 is denoted in implicit units. In practive this value may correspond to a real CO2 measurement of 20ppm.The second data record in the table records that the sensor "S_A" is a CO2 sensor. The third data record records that the sensor "S_A" is located in the room "R_A". The fourth records that the room "R_A" is a meeting room and the fifth data record records that the room "R_A" is located in building "B_A". This way complete characterization of the wireless sensor network and the environment where the sensor is deployed is stored in the graph database.

This information may be visually represented in the form of a graph as shown in FIG.2B, where the subjects 210 and the objects 230 are the nodes of the graph, represented as circles, and the predicates 220 are the connections between the graph nodes.

Thus, based on the CO2 level recorded by a specific sensor the graph database management system 130 may alert that the air quality in a specific room is above or below a pre-determined limit and/or that a specific room is empty or occupied by one, two or more people.

This may be performed by processing the recorded CO2 levels in a processing device 140. For this purpose, the processing device retrieves the CO2 levels of the respective sensors by querying or reading the objects' values of the respective sensors from the graph database, processes the retrieved values to estimate the room occupation and potentially issues an alert if the CO2 level of a respective room is higher than the health limit. The processing device 140 may be included in the graph database management system and thus forming part of it. Alternatively, the processing device 140 may be external to the graph database management system device. In both cases, the processing device 140 is configured to accesses the graph database 130 via a communication link 141.

The value of some of the objects in the graph database varies over time. Some may vary with a high frequency, i.e. their value will be modified or updated much more frequently than the value of other objects. For example, the value of the object of the first data record will be replaced or updated every 10 sec with a new sensed CO2 level by the sensor S_A, while the value of the objects of the second to fifth data records remain constant over a very long period of time. They might change only if the sensor is physically moved from one location to another, for example in a different room or even a different building. Thus, data records with objects having a value varying over time are, herein, referred to as a dynamic data record, while data records with objects having a constant value are referred to as a static data record.

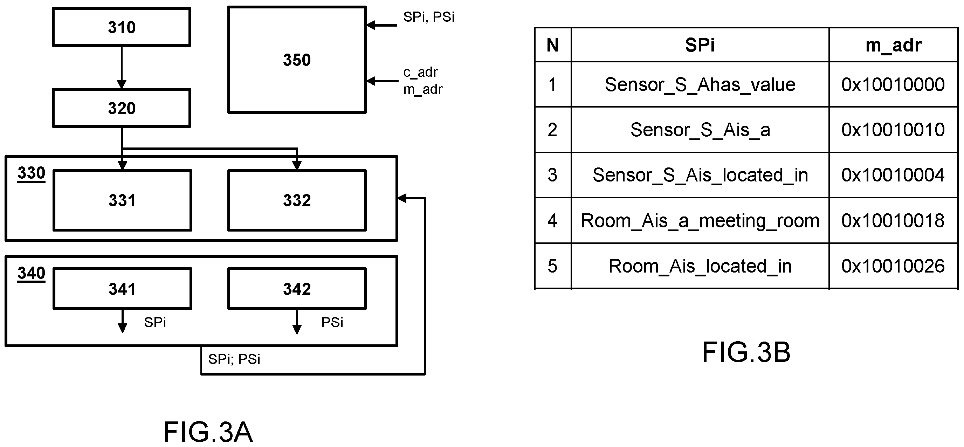

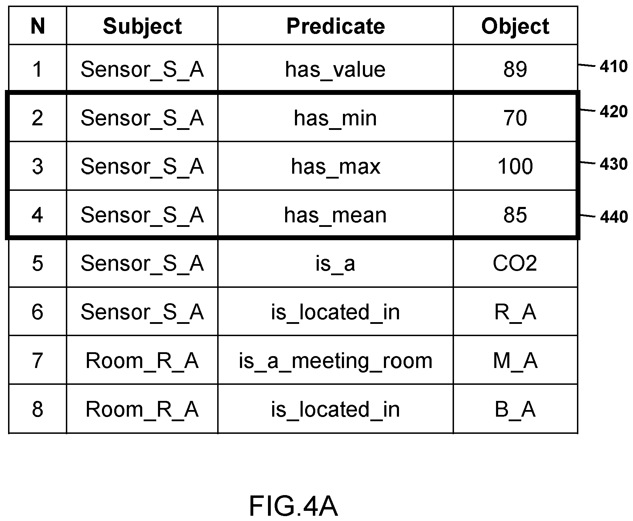

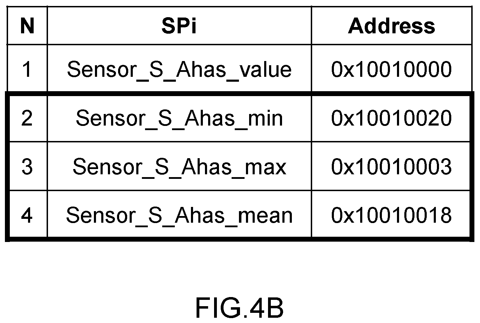

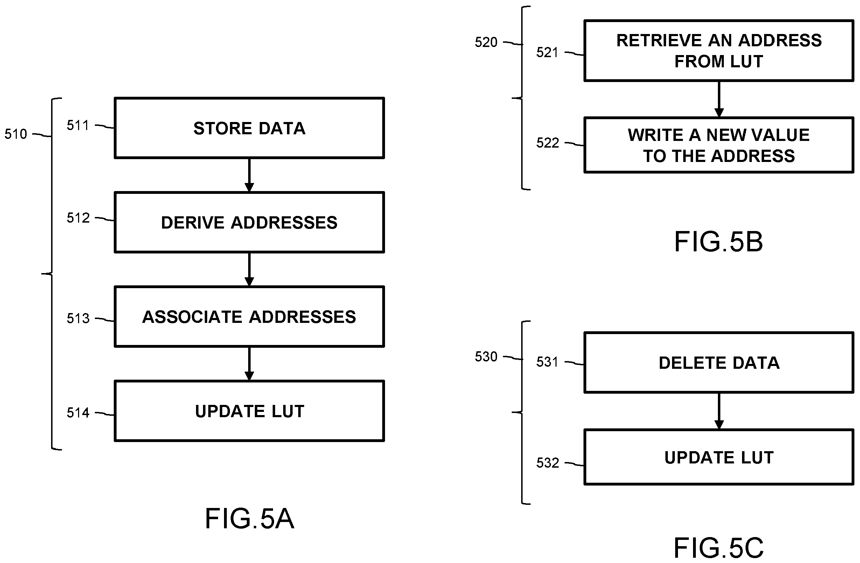

The graph database management system and its operation will be now described in more detail with reference to FIG.3, FIG.4, and FIG.5. FIG.3A shows relevant components of the graph database management system; FIG.3B shows an example look-up table storing the memory addresses of the data records' objects; FIG.4A shows an example of data records recorded in the graph database; FIG.4B shows an example of memory addresses for objects of respective data records; FIG.5A shows steps performed by the graph database management system for storing data records in the graph database; FIG.5B shows steps performed by the graph database management system for updating an object value of a data record, and FIG.5C shows steps performed by the graph database management system for deleting a data records from the graph database.

As described above, a graph database stores 511 data 310 in the form of data records, for example, triples. For this purpose, the data 310 is represented in the form of data records and then serialized by a data serialized 320, i.e. converted to a format that allows the database management system to store the data in its memory 330. Once the data is stored in the memory, memory addresses are derived 512 of the objects, i.e. the location in the memory where the objects are stored is derived. Depending on the memory architecture of the graph database management system 130, the memory architecture may comprise a cache memory 331 and a main memory storage 332. If the object is stored both in the cache memory 331 and the main memory 332, the graph database management system 130 retrieves the memory addresses in the cache, c_adr, and the memory address in the main memory, m_adr, respectively. If the object is stored directly in the main memory, then its corresponding memory address in the main memory, m_adr, is only derived. Next, the derived memory address is associated 513 with the object and stored 514 in the memory, in the form of a look-up table, LUT, 350.

In practice, when storing data in a graph database, each data record is associated with one or more indexes. For example, indexes for the subject-predicate pair, SPi, and predicate-subject pair, PSi, are derived. The SPi and PSi indexes are unique identifiers that allow fast data read when querying data from the graph database. Typically, they are derived by concatenating in a corresponding order the subject and the predicate of a respective data record. Thus, the memory address is, in effect, associated with the SPi and/or PSi indexes of the respective data records.

FIG.3B shows a simplified LUT 350 comprising memory addresses m_adr of the main memory 323 associated with the respective SPi indexes of the data records shown in FIG.2A. In case there are data records stored in the cache memory 331, the LUT 350 of FIG.3B is extended to include the cache memory address, c_adr.

Differently to conventional graph databases, instead of deleting the complete data record and then storing it again with its new object value, herein the update 520 of an object value is performed by modifying the object value in the memory. In other words, the object value stored in the memory of the graph database management system is simply overwritten with its new value. To do so, the graph database management system 130 retrieves 521 the memory addresses associated with the respective object from the LUT 350 and writes 522 the new object value into the memory address. If the object is stored in either of or in both the cache memory 331 and the main memory storage 332, the respective memory addresses are retrieved, and the new object value is written in the respective memory addresses.

For example, if a new value recorded by sensor S_A is received by the database management system 130, the system retrieves the index, e.g. SPi index, corresponding to the data record storing the value of the sensor, and then the memory addresses associated to that SPi from the LUT 350. In this example, the memory address, m_adr, 0x10010000, is retrieved. And, finally, the system writes the new value in the memory address 0x10010000.

Deleting 530 data from the graph database is performed in a similar way as in the conventional graph database management system. Herein, however, apart from deleting data from the graph database, the entries in the LUT corresponding to the deleted objects need to be deleted as well. For this purpose, the graph database management system deletes 531 the data from the respective memory, i.e. cache memory and main memory, and updates 532 the LUT by deleting the entries of the deleted objects from the LUT 350.

FIG.4A shows another example embodiment according to the present disclosure according to which additional data records are recorded in the graph database. These data records record one or more parameters of a model according to which an object value of a dynamic data record may be modelled. For the example shown in FIG.1, the model may be a range-bound specified by a minimum and a maximum CO2 level. According to this min-max model, a new CO2 level will be recorded in the graph database, i.e. the object value of the data record 410 will be updated, only if the latest CO2 level changes from a value within the range bounds to a value outside the range-bound, and, vice versa. For this purpose, before updating the value of the CO2 sensor in the database, the system 130 performs a query to retrieve the min and max values for this sensor. It then evaluated whether the new object value is out of the range defined by the minimum and maximum values. For example, if the new value is 50, the system will retrieve the memory address for that data record from the LUT 350 and write the new value at that location in the memory.

As shown in the figure, the range-bound is recorded as data records 420 and 430; the first data record 420 recording the minimum value of the range and the second data record 430 the maximum value of the range. Further, the model may include statistical information such as a mean value of the CO2 level, which may be recorded as another the data record 440 as shown in the figure.

The model may be pre-determined based on the specifics of the sensor and the environment where the sensor is located. The minimum and maximum CO2 levels of the range may be determined based on the size of the room. If the room is an office room configured to seat two people, the min range may be pre-set to a CO2 level signifying that the room is empty and the max range may be pre-set to a CO2 level signify that the room is occupied by more than two people. Thus, if the actual CO2 level is below the max value, an alarm may be issued that the room is occupied by more than two people.

Alternatively, the model may be derived by means of machine learning. In this case, the processing device 140 may be configured to train a learning model based on the CO2 levels measured by the respective sensors in the sensor network 100. Once the learning model is trained, the parameters of the trained model are stored in the graph database as data records for the respective sensors.

Additionally, the graph database may store data about the people entering the building 110. This may be achieved by storing the number of badge-in and badge-out entries of a badge reader installed at the main entrance of the building 110. Similarly, to the range-bound for the CO2 level, herein a model may be used to issue an alarm if the number of people within the building exceeds a pre-determined limit. The pre-determined limit may be recorded as a separate data record.

Depending on the specific requirements, the models recorded as data records in the graph database may be as simple as a min-max model or as complex as a weight matrix derived by means of machine learning.

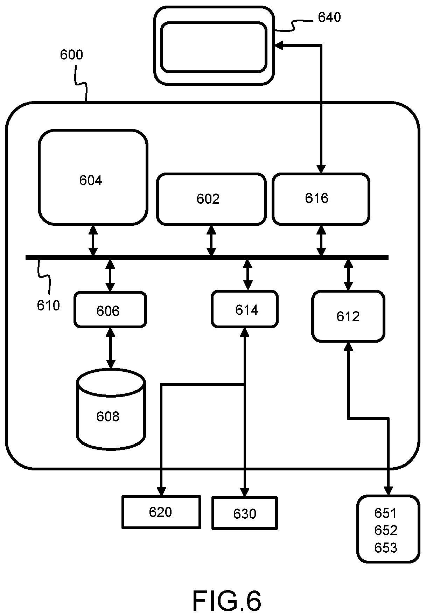

FIG.6 shows a suitable computing system 600 enabling the implementation of embodiments of the method for manipulating data in a graph database management system according to the present disclosure. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory, RAM, or another type of dynamic storage device that stores information and instructions for execution by processor 602 and/or a read-only memory, ROM, or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 651, 652, 653. The communication interface 612 of computing system 600 may be connected to such another computing system by means of a local area network, LAN, or a wide area network, WAN, such as for example the internet. Storage element interface 606 may comprise a storage interface such as for example a Serial Advanced Technology Attachment, SATA, interface or a Small Computer System Interface, SCSI, for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, - ROM disk, solid state drives, flash memory cards, ... could be used. Computing system 600 could thus correspond to the graph database management system as illustrated in FIG.1 and FIG.3.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A graph database management system comprising at least one processor (602) and at least one memory (604) including computer program code, the at least one memory and computer program code configured, with the at least one processor, to perform storing (511), in the memory, data in the form of data records in accordance with an entity-relationship model, the data records comprising at least a subject, a predicate, and an object, the database management system being further configured to perform:
- deriving (512) memory addresses of respective objects stored in the memory;
- associating (513) the memory addresses with the respective objects; and
- storing (514), in the memory, the memory addresses associated with the respective objects;
wherein the associating further comprises: determining unique identifiers for the respective objects and associating the memory addresses with the respective unique identifiers; and wherein the unique identifiers are derived based on the subject and predicate associated with the respective objects; and
wherein the storing further comprises storing the memory addresses and the respective unique identifiers.

2. The graph database management system according to claim 1, wherein the storing comprises storing the memory addresses and the respective unique identifiers in the form of a lookup table.

3. The graph database management system according to claims 1 or 2, wherein the respective objects have a value varying over time.

4. The graph database management system according to any one of the preceding claims, further configured to perform, when storing (510), in the memory, a new data record having an object with a varying over time value:
- storing (511), in the memory, the new data record;
- deriving (512) a memory address of the object of the new data record; and
- storing (514), in the memory, the memory address associated with the object.

5. The graph database management system according to any one of the preceding claims, further configured to perform, when deleting (530), from the memory, a data record having an object with a varying over time value:
- deleting (531), from the memory, the data record; and
- deleting (532), from the memory, the memory address associated with the object.

6. The graph database management system according to any one of the preceding claims, further configured to perform, when updating (520) a value of a respective object:
- retrieving (521), from the memory, the memory address associated with the respective object; and
- writing (522) a new value to the memory address associated with the respective object.

7. The graph database management system according to any one of the preceding claims further configured to perform :
- querying and checking a condition associated with a respective object; and
- updating the value of the respective object if the condition is satisfied.

8. The graph database management system according to claim 7, wherein the condition implements a threshold or a range-bound.

9. A method comprising:
- storing (511), in a memory (604), data in the form of data records in accordance with an entity-relationship model, the data records comprising at least a subject, a predicate, and an object;
- deriving (512) memory addresses of respective objects stored in the memory;
- associating (513) the memory addresses with the respective objects; and
- storing (514), in the memory, the memory addresses associated with the respective objects;
wherein the associating further comprises: determining unique identifiers for the respective objects and associating the memory addresses with the respective unique identifiers; and wherein the unique identifiers are derived based on the subject and predicate associated with the respective objects; and
wherein the storing (514) further comprises storing the memory addresses and the respective unique identifiers.

10. The method according to claim 9, wherein the storing comprises storing the memory addresses and the respective unique identifiers in the form of a lookup table.

11. The method according to claims 9 or 10, wherein the respective objects have a value varying over time.

12. The method according to any one of claims 9 to 11, further configured to perform, when updating (520) a value of a respective object:
- retrieving (521), from the memory, the memory address associated with the respective object; and
- writing (522) a new value to the memory address associated with the respective object.

13. The method according to any one of claims 9 to 12, further configured to perform:
- querying and checking a condition associated with a respective object; and
- updating the value of the respective object if the condition is satisfied.

14. A computer program product comprising computer-executable instructions for performing the following steps when the program is run on a computer:
- storing (511), in a memory (604), data in the form of data records in accordance with an entity-relationship model, the data records comprising at least a subject, a predicate, and an object;
- deriving (512) memory addresses of respective objects stored in the memory;
- associating (513) the memory addresses with the respective objects; and
- storing (514), in the memory, the memory addresses associated with the respective objects;
wherein the associating further comprises: determining unique identifiers for the respective objects and associating the memory addresses with the respective unique identifiers; and wherein the unique identifiers are derived based on the subject and predicate associated with the respective objects; and
wherein the storing (514) further comprises storing the memory addresses and the respective unique identifiers.

15. A computer readable storage medium comprising computer-executable instructions for performing the following steps when the program is run on a computer:
- storing (511), in a memory (604), data in the form of data records in accordance with an entity-relationship model, the data records comprising at least a subject, a predicate, and an object;
- deriving (512) memory addresses of respective objects stored in the memory;
- associating (513) the memory addresses with the respective objects; and
- storing (514), in the memory, the memory addresses associated with the respective objects;
wherein the associating further comprises: determining unique identifiers for the respective objects and associating the memory addresses with the respective unique identifiers; and wherein the unique identifiers are derived based on the subject and predicate associated with the respective objects; and
wherein the storing (514) further comprises storing the memory addresses and the respective unique identifiers.

## Patentansprüche

1. Graphendatenbankverwaltungssystem, das mindestens einen Prozessor (602) und mindestens einen Speicher (604), der einen Computerprogrammcode beinhaltet, umfasst, wobei der mindestens eine Speicher und der Computerprogrammcode dazu ausgelegt sind, mit dem mindestens einen Prozessor das Speichern (511) von Daten in Form von Datensätzen gemäß einem Entitätsbeziehungsmodell im Speicher durchzuführen, wobei die Datensätze mindestens ein Subjekt, ein Prädikat und ein Objekt umfassen, wobei das Datenbankverwaltungssystem ferner dazu ausgelegt ist, Folgendes durchzuführen:
- Ableiten (512) von Speicheradressen von jeweiligen im Speicher gespeicherten Objekten;
- Verknüpfen (513) der Speicheradressen mit den jeweiligen Objekten; und
- Speichern (514) der mit den jeweiligen Objekten verknüpften Speicheradressen im Speicher;
wobei das Verknüpfen ferner Folgendes umfasst: Bestimmen von eindeutigen Kennungen für die jeweiligen Objekte und Verknüpfen der Speicheradressen mit den jeweiligen eindeutigen Kennungen; und wobei die eindeutigen Kennungen auf Basis des Subjekts und des Prädikats, die mit den jeweiligen Objekten verknüpft sind, abgeleitet werden; und
wobei das Speichern ferner das Speichern der Speicheradressen und der jeweiligen eindeutigen Kennungen umfasst.

2. Graphendatenbankverwaltungssystem nach Anspruch 1, wobei das Speichern das Speichern der Speicheradressen und der jeweiligen eindeutigen Kennungen in Form einer Nachschlagetabelle umfasst.

3. Graphendatenbankverwaltungssystem nach Anspruch 1 oder 2, wobei die jeweiligen Objekte einen Wert aufweisen, der über die Zeit variiert.

4. Graphendatenbankverwaltungssystem nach einem der vorhergehenden Ansprüche, das ferner dazu ausgelegt ist, beim Speichern (510) eines neuen Datensatzes mit einem Objekt mit einem über die Zeit variierenden Wert im Speicher Folgendes durchzuführen:
- Speichern (511) des neuen Datensatzes im Speicher;
- Ableiten (512) einer Speicheradresse des Objekts des neuen Datensatzes; und
- Speichern (514) der mit dem Objekt verknüpften Speicheradresse im Speicher.

5. Graphendatenbankverwaltungssystem nach einem der vorhergehenden Ansprüche, das ferner dazu ausgelegt ist, beim Löschen (530) eines Datensatzes mit einem Objekt mit einem über die Zeit variierenden Wert aus dem Speicher Folgendes durchzuführen:
- Löschen (531) des Datensatzes aus dem Speicher; und
- Löschen (532) der mit dem Objekt verknüpften Speicheradresse aus dem Speicher.

6. Graphendatenbankverwaltungssystem nach einem der vorhergehenden Ansprüche, das ferner dazu ausgelegt ist, beim Aktualisieren (520) eines Wertes eines jeweiligen Objekts Folgendes durchzuführen:
- Abrufen (521) der mit dem jeweiligen Objekt verknüpften Speicheradresse aus dem Speicher; und
- Schreiben (522) eines neuen Wertes in die mit dem jeweiligen Objekt verknüpfte Speicheradresse.

7. Graphendatenbankverwaltungssystem nach einem der vorhergehenden Ansprüche, das ferner dazu ausgelegt ist, Folgendes durchzuführen:
- Abfragen und Prüfen einer Bedingung, die mit einem jeweiligen Objekt verknüpft ist; und
- Aktualisieren des Wertes des jeweiligen Objekts, wenn die Bedingung erfüllt ist.

8. Graphendatenbankverwaltungssystem nach Anspruch 7, wobei die Bedingung einen Schwellwert oder eine Bereichsgrenze implementiert.

9. Verfahren, das Folgendes umfasst:
- Speichern (511) von Daten in Form von Datensätzen gemäß einem Entitätsbeziehungsmodell in einem Speicher (604), wobei die Datensätze mindestens ein Subjekt, ein Prädikat und ein Objekt umfassen;
- Ableiten (512) von Speicheradressen von jeweiligen im Speicher gespeicherten Objekten;
- Verknüpfen (513) der Speicheradressen mit den jeweiligen Objekten; und
- Speichern (514) der mit den jeweiligen Objekten verknüpften Speicheradressen im Speicher;
wobei das Verknüpfen ferner Folgendes umfasst: Bestimmen von eindeutigen Kennungen für die jeweiligen Objekte und Verknüpfen der Speicheradressen mit den jeweiligen eindeutigen Kennungen; und wobei die eindeutigen Kennungen auf Basis des Subjekts und des Prädikats, die mit den jeweiligen Objekten verknüpft sind, abgeleitet werden; und
wobei das Speichern (514) ferner das Speichern der Speicheradressen und der jeweiligen eindeutigen Kennungen umfasst.

10. Verfahren nach Anspruch 9, wobei das Speichern das Speichern der Speicheradressen und der jeweiligen eindeutigen Kennungen in Form einer Nachschlagetabelle umfasst.

11. Verfahren nach Anspruch 9 oder 10, wobei die jeweiligen Objekte einen Wert aufweisen, der über die Zeit variiert.

12. Verfahren nach einem der Ansprüche 9 bis 11, das ferner dazu ausgelegt ist, beim Aktualisieren (520) eines Wertes eines jeweiligen Objekts Folgendes durchzuführen:
- Abrufen (521) der mit dem jeweiligen Objekt verknüpften Speicheradresse aus dem Speicher; und
- Schreiben (522) eines neuen Wertes in die mit dem jeweiligen Objekt verknüpfte Speicheradresse.

13. Verfahren nach einem der Ansprüche 9 bis 12, das ferner dazu ausgelegt ist, Folgendes durchzuführen:
- Abfragen und Prüfen einer Bedingung, die mit einem jeweiligen Objekt verknüpft ist; und
- Aktualisieren des Wertes des jeweiligen Objekts, wenn die Bedingung erfüllt ist.

14. Computerprogrammprodukt, das computerausführbare Anweisungen zum Durchführen der folgenden Schritte, wenn das Programm auf einem Computer ausgeführt wird, umfasst:
- Speichern (511) von Daten in Form von Datensätzen gemäß einem Entitätsbeziehungsmodell in einem Speicher (604), wobei die Datensätze mindestens ein Subjekt, ein Prädikat und ein Objekt umfassen;
- Ableiten (512) von Speicheradressen von jeweiligen im Speicher gespeicherten Objekten;
- Verknüpfen (513) der Speicheradressen mit den jeweiligen Objekten; und
- Speichern (514) der mit den jeweiligen Objekten verknüpften Speicheradressen im Speicher;
wobei das Verknüpfen ferner Folgendes umfasst: Bestimmen von eindeutigen Kennungen für die jeweiligen Objekte und Verknüpfen der Speicheradressen mit den jeweiligen eindeutigen Kennungen; und wobei die eindeutigen Kennungen auf Basis des Subjekts und des Prädikats, die mit den jeweiligen Objekten verknüpft sind, abgeleitet werden; und
wobei das Speichern (514) ferner das Speichern der Speicheradressen und der jeweiligen eindeutigen Kennungen umfasst.

15. Computerlesbares Speichermedium, das computerausführbare Anweisungen zum Durchführen der folgenden Schritte, wenn das Programm auf einem Computer ausgeführt wird, umfasst:
- Speichern (511) von Daten in Form von Datensätzen gemäß einem Entitätsbeziehungsmodell in einem Speicher (604), wobei die Datensätze mindestens ein Subjekt, ein Prädikat und ein Objekt umfassen;
- Ableiten (512) von Speicheradressen von jeweiligen im Speicher gespeicherten Objekten;
- Verknüpfen (513) der Speicheradressen mit den jeweiligen Objekten; und
- Speichern (514) der mit den jeweiligen Objekten verknüpften Speicheradressen im Speicher;
wobei das Verknüpfen ferner Folgendes umfasst: Bestimmen von eindeutigen Kennungen für die jeweiligen Objekte und Verknüpfen der Speicheradressen mit den jeweiligen eindeutigen Kennungen; und wobei die eindeutigen Kennungen auf Basis des Subjekts und des Prädikats, die mit den jeweiligen Objekten verknüpft sind, abgeleitet werden; und
wobei das Speichern (514) ferner das Speichern der Speicheradressen und der jeweiligen eindeutigen Kennungen umfasst.

## Revendications

1. Système de gestion de base de données graphique comprenant au moins un processeur (602) et au moins une mémoire (604) comportant un code de programme informatique, l'au moins une mémoire et le code de programme informatique étant configurés, avec l'au moins un processeur, pour effectuer le stockage (511), dans la mémoire, de données sous forme d'enregistrements de données, conformément à un modèle entité-relation, les enregistrements de données comprenant au moins un sujet, un prédicat et un objet, le système de gestion de base de données étant en outre configuré pour effectuer ce qui suit :
- dériver (512) des adresses mémoire d'objets respectifs stockés dans la mémoire ;
- associer (513) les adresses mémoire aux objets respectifs ; et
- stocker (514), dans la mémoire, les adresses mémoire associées aux objets respectifs ;
dans lequel l'association comprend en outre : la détermination d'identifiants uniques pour les objets respectifs et l'association des adresses mémoire aux identifiants uniques respectifs ; et dans lequel les identifiants uniques sont dérivés en fonction du sujet et du prédicat associés aux objets respectifs ; et
dans lequel le stockage comprend en outre le stockage des adresses mémoire et des identifiants uniques respectifs.

2. Système de gestion de base de données graphique selon la revendication 1, dans lequel le stockage comprend le stockage des adresses mémoire et des identifiants uniques respectifs sous la forme d'une table de consultation.

3. Système de gestion de base de données graphique selon les revendications 1 ou 2, dans lequel les objets respectifs ont une valeur qui varie dans le temps.

4. Système de gestion de base de données graphique selon l'une des revendications précédentes, configuré en outre pour effectuer ce qui suit, lors du stockage (510), dans la mémoire, d'un nouvel enregistrement de données ayant un objet à valeur variant dans le temps :
- stocker (511), dans la mémoire, le nouvel enregistrement de données ;
- dériver (512) une adresse mémoire de l'objet du nouvel enregistrement de données ; et
- stocker (514), dans la mémoire, l'adresse mémoire associée à l'objet.

5. Système de gestion de base de données graphique selon l'une des revendications précédentes, configuré en outre pour effectuer ce qui suit, lors de l'effacement (530), de la mémoire, d'un enregistrement de données ayant un objet à valeur variant dans le temps :
- effacer (531), de la mémoire, l'enregistrement de données ; et
- effacer (532), de la mémoire, l'adresse mémoire associée à l'objet.

6. Système de gestion de base de données graphique selon l'une des revendications précédentes, configuré en outre pour effectuer ce qui suit, lors de la mise à jour (520) d'une valeur d'un objet respectif :
- récupérer (521), dans la mémoire, l'adresse mémoire associée à l'objet respectif ; et
- écrire (522) une nouvelle valeur dans l'adresse mémoire associée à l'objet respectif.

7. Système de gestion de base de données graphique selon l'une des revendications précédentes, configuré en outre pour effectuer ce qui suit :
- interroger et vérifier une condition associée à un objet respectif ; et
- mettre à jour la valeur de l'objet respectif si la condition est remplie.

8. Système de gestion de base de données graphique selon la revendication 7, dans lequel la condition met en œuvre un seuil ou une fourchette étroite.

9. Procédé comprenant :
- le stockage (511), dans une mémoire (604), de données sous forme d'enregistrements de données, conformément à un modèle entité-relation, les enregistrements de données comprenant au moins un sujet, un prédicat et un objet ;
- la dérivation (512) d'une adresses mémoire d'objets respectifs stockés dans la mémoire ;
- l'association (513) des adresses mémoire aux objets respectifs ; et
- le stockage (514), dans la mémoire, des adresses mémoire associées aux objets respectifs ;
dans lequel l'association comprend en outre : la détermination d'identifiants uniques pour les objets respectifs et l'association des adresses mémoire aux identifiants uniques respectifs ; et dans lequel les identifiants uniques sont dérivés en fonction du sujet et du prédicat associés aux objets respectifs ; et
dans lequel le stockage (514) comprend en outre le stockage des adresses mémoire et des identifiants uniques respectifs.

10. Procédé selon la revendication 9, dans lequel le stockage comprend le stockage des adresses mémoire et des identifiants uniques respectifs sous la forme d'une table de consultation.

11. Procédé selon les revendications 9 ou 10, dans lequel les objets respectifs ont une valeur qui varie dans le temps.

12. Procédé selon l'une des revendications 9 à 11, configuré en outre pour effectuer ce qui suit, lors de la mise à jour (520) d'une valeur d'un objet respectif :
- récupérer (521), dans la mémoire, l'adresse mémoire associée à l'objet respectif ; et
- écrire (522) une nouvelle valeur dans l'adresse mémoire associée à l'objet respectif.

13. Procédé selon l'une des revendications 9 à 12, configuré en outre pour effectuer ce qui suit :
- interroger et vérifier une condition associée à un objet respectif ; et
- mettre à jour la valeur de l'objet respectif si la condition est remplie.

14. Produit de programme informatique comprenant des instructions exécutables par ordinateur pour effectuer les étapes suivantes lorsque le programme est exécuté sur un ordinateur :
- stocker (511), dans une mémoire (604), des données sous forme d'enregistrements de données, conformément à un modèle entité-relation, les enregistrements de données comprenant au moins un sujet, un prédicat et un objet ;
- dériver (512) des adresses mémoire d'objets respectifs stockés dans la mémoire ;
- associer (513) les adresses mémoire aux objets respectifs ; et
- stocker (514), dans la mémoire, les adresses mémoire associées aux objets respectifs ;
dans lequel l'association comprend en outre : la détermination d'identifiants uniques pour les objets respectifs et l'association des adresses mémoire aux identifiants uniques respectifs ; et dans lequel les identifiants uniques sont dérivés en fonction du sujet et du prédicat associés aux objets respectifs ; et
dans lequel le stockage (514) comprend en outre le stockage des adresses mémoire et des identifiants uniques respectifs.

15. Support de stockage lisible par ordinateur comprenant des instructions exécutables par ordinateur pour effectuer les étapes suivantes lorsque le programme est exécuté sur un ordinateur :
- stocker (511), dans une mémoire (604), des données sous forme d'enregistrements de données, conformément à un modèle entité-relation, les enregistrements de données comprenant au moins un sujet, un prédicat et un objet ;
- dériver (512) des adresses mémoire d'objets respectifs stockés dans la mémoire ;
- associer (513) les adresses mémoire aux objets respectifs ; et
- stocker (514), dans la mémoire, les adresses mémoire associées aux objets respectifs ;
dans lequel l'association comprend en outre : la détermination d'identifiants uniques pour les objets respectifs et l'association des adresses mémoire aux identifiants uniques respectifs ; et dans lequel les identifiants uniques sont dérivés en fonction du sujet et du prédicat associés aux objets respectifs ; et
dans lequel le stockage (514) comprend en outre le stockage des adresses mémoire et des identifiants uniques respectifs.
